# DEMANDE DE BREVET EUROPEEN

(11) **EP 1 715 449 A2**
(43) Date de publication de la demande: **25.10.2006**
(21) Numéro de dépôt: 06290640.9
(22) Date de dépôt: 19.04.2006
(51) Int. Cl.: G06N 5/02

(54) **Procédé de construction de moyens électroniques pour la modélisation de comportements globaux**

(30) Priorité: 19.04.2005 FR 0503898
(71) Demandeur: Hendrickx, Bernard, 26330 Chateaneuf de Galaure (FR)
(72) Inventeur: Hendrickx, Bernard, 26330 Chateaneuf de Galaure (FR)
(74) Mandataire: Arnaud, Jean

(57) **Abrégé**

L'invention concerne un procédé de construction de moyens électroniques pour la modélisation de comportements globaux pouvant être représentés par des variables d'intensité et des variables d'extensité. Le procédé comprend une étape de définition de groupes d'activités choisies parmi les activités complexes, diverses et complémentaires des comportements globaux observés, chaque groupe formant un ensemble cohérent d'activités, l'ensemble des groupes formant une collection telle que les activités de tous les groupes forment une proportion significative des activités des comportements globaux, puis, par chaque organe expert d'une collection, une étape d'exécution d'opérations comprenant : une évaluation, pour chaque groupe d'activités, de plusieurs relations entre une variable d'intensité et une variable d'extensité, l'évaluation ayant un résultat sous forme d'une valeur choisie sur une échelle numérique bornée, et la pondération des relations par détermination d'un poids à affecter aux relations, et, pour l'ensemble des organes experts, une étape de calcul de résultats bruts et pondérés, et de détermination d'un modèle optimal de réseau de neurones. Dans une autre étape, le procédé comprend la construction de moyens électroniques, comprenant au moins un réseau de neurones correspondant au modèle optimal obtenu.

## Description

L'invention concerne, pour la construction de moyens électroniques comportant avantageusement au moins un réseau de neurones, un procédé de modélisation de comportements globaux comprenant des activités complexes, diverses et complémentaires, à l'aide de grandeurs qui peuvent être représentées par des variables d'intensité et des variables d'extensité. Plus précisément, elle concerne la construction de moyens de modélisation quantifiée de systèmes complexes par détermination et calcul de variables représentatives.

Il existe de nombreux domaines, notamment scientifiques, dans lesquels, du fait de la complexité des comportements globaux observés, la connaissance repose principalement sur des descriptions et de façon parcellaire sur des résultats correspondant à des grandeurs quantifiées, c'est-à-dire à des grandeurs auxquelles on peut affecter des valeurs qui peuvent être comparées et qui permettent donc un classement sur une échelle numérique. Cependant, ces grandeurs sont extrêmement diverses, et elles ne représentent qu'une juxtaposition de grandeurs qui, ensemble, ne constituent pas une représentation significative du système complexe concerné, et sont donc indissociables d'une description.

Il est donc souhaitable de pouvoir modéliser des comportements globaux comprenant des activités complexes, diverses et complémentaires, par des résultats quantifiés qui constituent ensemble une représentation quantifiée significative du système complexe concerné. Pour l'étude et l'analyse de tels systèmes complexes, une telle représentation modélisée peut alors être utilisée par elle-même, sans être associée à une description.

Pour mieux faire comprendre l'invention, on va considérer un exemple d'application potentielle de celle-ci.

Il existe dans la nature des insectes (termites, fourmis, abeilles) qui, à un niveau global, par exemple d'un essaim, présentent des comportements globaux dont les activités sont complexes, diverses et complémentaires. Ainsi, des chercheurs, en observant un essaim d'abeilles, ont constaté que certaines abeilles effectuaient certaines activités spécifiques, et que certaines autres semblaient remplir plusieurs fonctions. Plus précisément, dans certaines conditions, certaines abeilles ont des activités très spécialisées mais nécessitant une certaine latitude d'exécution, alors que d'autres ont une gamme d'activités beaucoup plus large mais limitée d'une autre manière. La simple description des comportements, et même la détermination quantifiée de certaines grandeurs, telles qu'une vitesse d'exécution, l'importance du résultat obtenu, etc., ne permettent pas d'appréhender de façon globale et comparative les comportements par exemple d'essaims d'espèces voisines.

Il est donc souhaitable de pouvoir modéliser l'ensemble du comportement d'un tel essaim malgré sa complexité et à partir de ses activités élémentaires, sur la base d'une évaluation des activités et de la comparaison des importances relatives de ces activités.

On conçoit que, du fait de la variété et de la complexité des comportements, des entités actives et des activités, une telle modélisation présente des difficultés.

On connaît déjà des réseaux de neurones assurant une telle modélisation et des procédés de construction de réseaux de neurones destinés à la modélisation de phénomènes.

On ne décrit pas l'ensemble des principes et procédés utilisés de façon classique pour la construction des réseaux de neurones car ils sont connus depuis longtemps, et il existe une littérature considérable à leur sujet. On ne décrit donc que les aspects de la technique antérieure qui sont utiles pour la compréhension de l'invention.

Les réseaux de neurones sont des circuits matériels, réalisés par exemple sous forme de circuits intégrés, mais qui peuvent aussi être réalisés uniquement sous forme d'un logiciel. Un neurone est un élément qui possède des entrées destinées à recevoir des signaux représentatifs de variables et une ou plusieurs sorties, et il transmet des données de sortie ou de résultat par application d'une fonction d'activation.

Les variables sont des grandeurs qui peuvent prendre plusieurs valeurs et participent au phénomène qu'on veut modéliser. Le phénomène qu'on veut modéliser peut être quelconque, mais les réseaux de neurones sont appliqués dans les cas envisagés à des phénomènes dont on ne connaît pas la fonction qui lie les variables au résultat. Si l'on connaît cette fonction, il est plus simple et plus précis de réaliser directement un circuit mettant en oeuvre la fonction.

Un modèle d'un phénomène est représenté à la fois par l'ensemble des variables et par le traitement qu'elles subissent pour donner le résultat, notamment par les fonctions d'activation des neurones.

La validité d'un modèle est déterminée par apprentissage, c'est-à-dire par utilisation, comme signaux d'entrée, de valeurs de variables qui ont été déterminées et dont on connaît le résultat. L'apprentissage comprend l'application de plusieurs exemples, c'est-à-dire de plusieurs groupes de valeurs de variables, avec obtention de résultats qui peuvent être comparés aux résultats des exemples.

L'appréciation de la validité d'un modèle s'effectue par comparaison du résultat obtenu dans l'apprentissage avec le résultat de l'exemple considéré.

On utilise aussi des "descripteurs" qui sont des ensembles de valeurs d'une même variable dans un ensemble d'exemples utilisés pour l'apprentissage. Cet ensemble de valeurs de variables peut avoir diverses formes. Dans un exemple, les descripteurs sont des vecteurs à N dimensions, N étant le nombre d'exemples utilisés pour l'apprentissage. Ces vecteurs agissent donc dans un espace à N dimensions.

Ainsi, les réseaux de neurones permettent la modélisation de phénomènes qui peuvent être complexes, mais ils travaillent toujours par réception de variables ou de descripteurs, et par transmission d'un résultat. En d'autres termes, le réseau de neurones modélise un phénomène, et si le phénomène devient trop complexe, par exemple par augmentation du nombre de variables, le temps de fonctionnement augmente exponentiellement.

Le procédé de construction d'un tel réseau de neurones comprend en général, une première phase qui, à partir d'un groupe de variables trop important, détermine les seules variables qui doivent être utilisées parce qu'elles ont une signification dans le phénomène, et une seconde phase de construction d'un réseau de neurones optimal qui, à partir des signaux représentatifs de valeurs des variables, transmet des données de résultat représentant le phénomène.

La première phase comprend la détermination de descripteurs, en nombre excessif, et la sélection, parmi l'ensemble des modèles possibles, de celui qui explique de la meilleure manière possible le phénomène observé. Il faut noter que cette explication doit tenir compte de la performance du modèle (faible écart entre le résultat donné par le modèle et les observations), mais aussi de sa complexité (notamment parce que le traitement doit être aussi rapide que possible) .

On pourrait évaluer tous les modèles possibles. Il faut noter qu'un modèle a un type (par exemple linéaire ou non, statique ou dynamique), une structure (définie par la famille de fonctions envisagées et l'ensemble des variables descriptives nécessaires), et des paramètres (qui définissent la fonction choisie parmi la famille F de fonctions).

Une première possibilité de sélection d'un modèle comprend la prise en considération d'un modèle complet utilisant tous les descripteurs, puis la réalisation de tous les sous-modèles possibles et, parmi ces sous-modèles, la sélection du meilleur. Il faut alors estimer un nombre de modèles extrêmement important. En effet, lorsque le nombre de variables, et donc de descripteurs, est égal à P, il faut estimer 2P modèles séparément. Si l'ensemble comporte quinze variables, le nombre de modèles possibles à comparer est de 32 768. Ce nombre devient vite extrêmement grand si bien que ce procédé devient rapidement inutilisable.

On a donc mis au point d'autres procédés permettant de réduire le nombre de modèles à évaluer. On connaît ainsi des procédés destructif, constructif, et à variable aléatoire.

Dans le procédé "destructif", on utilise, à partir du modèle complet à P descripteurs, tous les sous-modèles possibles à P-1 descripteurs, on sélectionne celui qui donne la meilleure performance, et, si le sous-modèle est meilleur que le modèle complet, on reprend la procédure à partir de celui-ci alors que, s'il n'est pas meilleur que le modèle complet, on repart du modèle complet.

Dans le procédé "constructif", on part d'un modèle à 0 descripteur et on construit les P modèles à 1 descripteur, on choisit le meilleur de ces modèles et on poursuit la procédure par addition d'un descripteur, jusqu'à ce que le modèle obtenu soit meilleur que tous les modèles obtenus par augmentation du nombre de descripteurs d'une unité. Ces deux procédés permettent une réduction très importante du nombre de modèles à évaluer.

Dans le procédé "à variable aléatoire", décrit dans le document FR-2 765 705, les descripteurs sont ordonnés par ordre de signification décroissante, et on obtient ainsi un classement des descripteurs. On considère alors les sous-modèles constitués par un seul descripteur, deux descripteurs, trois descripteurs, etc., en commençant à chaque fois par le descripteur le plus significatif. En outre, on utilise une variable supplémentaire qui a un descripteur supplémentaire qui est aléatoire. Lorsque les descripteurs sont ordonnés, on considère que tous ceux qui se trouvent après le descripteur aléatoire ont une signification qui n'est pas supérieure à celle du descripteur aléatoire et peuvent donc être éliminés.

Bien que ces procédés puissent ne pas donner un modèle optimal, on doit souvent les utiliser dans la mesure où l'évaluation de la totalité des modèles possibles est en dehors des possibilités des machines disponibles de calcul.

On note donc que la complexité des "phénomènes" qui peuvent être modélisés par des réseaux de neurones est limitée par la puissance de calcul nécessaire qui augmente exponentiellement.

Le problème général que concerne l'invention est la modélisation de comportements globaux très complexes qu'on peut considérer comme constitués de nombreux "phénomènes" eux mêmes complexes. Comme l'indique la description qui précède, il ne suffit donc pas d'utiliser de simples réseaux de neurones. Selon l'invention, on utilise des moyens électroniques de traitement préalable des variables et/ou des descripteurs en amont d'un ou plusieurs réseaux de neurones pour que ces variables et/ou descripteurs soient en nombre et/ou sous une forme permettant l'utilisation d'un ou plusieurs réseaux de neurones.

Ainsi, l'invention concerne de façon générale un perfectionnement d'un procédé de construction de réseaux de neurones destinés à la modélisation de phénomènes, chaque réseau comprenant des entrées destinées à recevoir des signaux représentatifs de valeurs de variables, des neurones destinés à appliquer une fonction d'activation aux signaux qu'ils reçoivent, au moins une sortie destinée à transmettre des données de résultat du modèle du phénomène concerné, et des liaisons formées entre les entrées et les neurones et entre les neurones et la sortie ; un tel procédé comprend, dans une première étape, la détermination des variables qui doivent être utilisés dans des modèles des phénomènes par détermination de descripteurs représentatifs chacun de valeurs d'une variable, dans une seconde étape, la sélection des variables à incorporer à au moins un modèle optimal de chaque phénomène par évaluation des résultats de plusieurs modèles, et dans une troisième étape, la construction d'un réseau de neurones pour chaque phénomène par détermination des liaisons des neurones en fonction d'un modèle obtenu.

Dans un tel procédé de type connu, l'invention concerne essentiellement un perfectionnement apporté aux première et seconde étapes, afin qu'il assure une modélisation de comportements globaux qui autorise une évaluation globale quantifiée de ces comportements, d'une manière permettant d'affiner la compréhension de ces comportements, et de permettre la comparaison entre divers comportements, sans recours à de simples descriptions pour des parties significatives de ces comportements.

Plus précisément, l'invention concerne un procédé de construction de moyens électroniques, incluant de préférence un réseau de neurones, pour la modélisation de comportements globaux comprenant des activités complexes, diverses et complémentaires, par des grandeurs pouvant être représentées par des variables d'intensité et des variables d'extensité, le procédé comprenant, dans une première étape, la détermination des variables qui doivent être utilisées dans des modèles des activités par détermination de descripteurs représentatifs chacun de valeurs d'une variable, dans une seconde étape, la sélection des variables à incorporer à au moins un modèle optimal des activités par évaluation des résultats de plusieurs modèles, et dans une troisième étape, la construction de moyens électroniques, incluant de préférence un réseau de neurones ayant des liaisons, correspondant au modèle optimal obtenu ; selon l'invention, la première étape comprend une étape de définition de groupes d'activités choisies parmi les activités complexes, diverses et complémentaires des comportements globaux, chaque groupe formant un ensemble cohérent d'activités, l'ensemble des groupes formant une collection de groupes telle que les activités de tous les groupes forment une proportion significative des activités complexes, diverses et complémentaires des comportements globaux, la seconde étape comprend l'exécution, par chaque organe expert d'une collection d'organes experts, d'opérations qui comprennent une évaluation, pour chaque groupe d'activités, de plusieurs relations entre une variable d'intensité et une variable d'extensité représentatives des grandeurs, l'évaluation ayant un résultat sous forme d'une valeur choisie sur une échelle numérique bornée, et la pondération des relations par détermination d'un poids à affecter aux relations, puis, pour l'ensemble des organes experts, une étape de calcul de résultats bruts et de résultats pondérés par utilisation des poids affectés aux relations par les organes experts, et de présentation des résultats.

Le procédé comprend de préférence, préalablement à la première étape, la construction et le test d'un ensemble formant un dispositif d'observation et d'évaluation, mettant en oeuvre de préférence la complémentarité des logiques classificatoire, de rangement et numérique, et rapprochant de façon objective les variables d'intensité et d'extensité, pour la définition des leurs relations.

De préférence, l'étape de définition de groupes d'activités comprend la formation, pour chaque groupe, d'une liste d'activités.

Dans un mode de réalisation, la pondération des relations par détermination d'un poids à affecter aux relations comprend la pondération séparée de chacune des relations.

Dans un autre mode de réalisation, la pondération des relations par détermination d'un poids à affecter aux relations comprend la pondération par groupes de plusieurs relations apparentées.

Dans un mode de réalisation, l'étape de calcul comprend, pour chaque organe expert, un calcul de résultats bruts à partir des valeurs déterminées par l'organe expert, et un calcul de résultats pondérés par utilisation des poids affectés par l'organe expert.

Dans un autre mode de réalisation, l'étape de calcul comprend, pour chaque organe expert, un calcul de résultats bruts à partir des valeurs déterminées par l'organe expert, et un calcul de résultats pondérés par utilisation des poids déterminés par l'ensemble des organes experts.

De préférence, l'étape de calcul de résultats comprend un calcul de résultats moyens pour l'ensemble des organes experts.

De préférence, le procédé comprend aussi le traitement des anomalies présentées par les résultats d'un organe expert au moins. Dans une première variante, le traitement des anomalies présentées par les résultats d'un organe expert au moins comprend, pour une relation au moins, la suppression d'une valeur présentant le plus de différence avec les résultats moyens. Dans une seconde variante, le traitement des anomalies présentées par les résultats d'un organe expert au moins comprend, pour une relation au moins, le remplacement d'une valeur présentant le plus de différence par une valeur correspondant aux résultats moyens.

De préférence, une variable d'intensité au moins est choisie dans le groupe comprenant un niveau de complexité d'une activité, un niveau d'élaboration d'un contrôle d'activité, une intensité de perturbation d'une activité, un degré de qualité d'une activité, et un niveau de spécialisation.

De préférence, une variable d'extensité au moins est choisie dans le groupe comprenant un nombre d'unités exécutant un groupe d'activités, une durée d'une activité, une durée d'une série d'activités, un délai avant l'obtention d'un résultat, une étendue d'un milieu dans lequel s'effectue une activité, et une durée de spécialisation.

On va considérer maintenant plus en détail les différentes étapes d'un procédé de modélisation de variables représentatives de comportements globaux selon l'invention.

Avant la description du procédé de l'invention, il convient de définir certains termes et expressions dans le cadre du comportement global étudié. Ainsi, bien qu'on ait considéré des activités, des groupes d'activités, des entités actives, des grandeurs, des variables d'intensité et d'extensité, et des relations, ces termes et expressions doivent être précisés.

Une activité peut être une simple tâche, mais aussi un groupe de plusieurs tâches. Un groupe d'activités correspond à l'ensemble des activités exécutées par une entité active. Une entité active, par exemple une abeille, est donc capable d'assurer non seulement une activité, mais aussi un groupe d'activités.

Une grandeur peut être représentée par une variable d'intensité ou d'extensité, ces termes intensité ou extensité ayant de façon générale leur sens habituel en physique. Une variable d'intensité est représentative d'un niveau, d'un degré ou d'une intensité, tel qu'un niveau de complexité ou de qualité. Une variable d'extensité est représentative d'un nombre, d'une durée, d'une quantité, etc. Il arrive parfois qu'une même grandeur puisse correspondre à une intensité ou une extensité : c'est son rôle dans la relation particulière qui détermine s'il s'agit d'une intensité ou d'une extensité.

Une relation est considérée dans son acception mathématique habituelle, car elle correspond au lien existant entre la variable d'intensité et la variable d'extensité. On peut citer, à titre d'exemples de relations, les relations (niveau de complexité d'une activité/nombre d'unités exécutant un groupe d'activités), (niveau d'élaboration d'un contrôle d'activité/importance de perturbation de l'activité), (intensité de perturbation d'une activité/délai avant la détection du résultat de la perturbation), (niveau de spécialisation/durée de spécialisation), (degré de qualité d'une activité/nombre d'unités exécutant l'activité), etc.

Préalablement à la première phase du procédé, il convient de construire les outils qui doivent être utilisés dans le procédé, les plus importants étant les relations entre des variables d'intensité et des variables d'extensité. Cette construction repose évidemment sur les connaissances dont disposent les spécialistes du domaine concerné. En conséquence, une étape préalable comporte la construction et le test de l'ensemble du dispositif d'observation et d'évaluation, mettant en oeuvre la complémentarité des logiques classificatoire, de rangement et numérique, et rapprochant de façon objective les variables d'intensité et d'extensité. Ainsi, à partir des résultats d'observations antérieures, le rapprochement des variables, la classification et le rangement combiné des observations et la numérisation des résultats permettent la construction du dispositif, c'est-à-dire la détermination des outils utilisés. Au fur et à mesure de l'obtention de résultats relatifs à des systèmes de plus en plus nombreux, le dispositif, et donc les relations, se stabilisent.

Après cette étape préalable, exécutée une seule fois et progressivement affinée, le procédé de modélisation du comportement global est appliqué au système observé.

Une première phase du procédé est la définition des groupes d'activités. Chaque groupe doit constituer un ensemble cohérent d'activités, par exemple un groupe d'activités exécutées par une entité active d'un essaim. Ces groupes peuvent être très différents, mais il faut qu'ils soient représentatifs de certaines activités choisies parmi les activités complexes, diverses et complémentaires du comportement global concerné, tout en formant une unité rapportée à une entité active, une situation, une période, etc. Il faut noter qu'une même activité spécifique parmi les activités complexes, diverses et complémentaires peut être comprise dans plusieurs groupes. Ce qui est essentiel est que d'une part les groupes forment des ensembles cohérents d'activités, et que d'autre part l'ensemble des groupes couvre une partie significative, de préférence majoritaire, des activités complexes, diverses et complémentaires du comportement global concerné, par exemple étudié.

Cette définition des groupes et la construction de la collection de groupes sont en général exécutées par des observateurs objectifs des comportements globaux considérés. Il faut bien comprendre que ces groupes d'activités ne correspondent pas par exemple au comportement d'une entité active, mais plutôt d'une catégorie d'entités dont les activités se ressemblent. C'est la raison pour laquelle cette définition doit être effectuée par des observateurs objectifs, capables de regrouper les différentes activités, mais sans en apprécier l'importance relative.

Dans une seconde phase, plusieurs organes experts, en nombre significatif, de préférence d'au moins une dizaine, participent à plusieurs étapes. Chaque organe expert est soit un spécialiste ayant une bonne connaissance du comportement global, notamment de la description de celui-ci, soit d'un organe contenant des données spécialement préparées et accessibles de préférence dans une base de données. Il peut aussi s'agir d'un groupe de savants travaillant dans divers pays sur un même sujet, tel que l'étude du comportement d'une espèce d'insectes. De préférence, chaque organe expert reflète la connaissance du comportement global étudié et de ses activités, correspondant à un point de vue particulier.

La première étape exécutée par un tel organe expert est une évaluation, pour chaque groupe préalablement défini, de plusieurs relations entre une variable d'intensité et une variable d'extensité. De préférence, chaque relation est sous forme d'un tableau ou d'un graphique, c'est-à-dire d'un système à deux entrées, une variable d'intensité et une variable d'extensité. Dans le cas d'un tableau par exemple, la variable d'intensité forme les têtes de colonne ou de ligne, alors que la variable d'extensité forme les têtes de ligne ou de colonne respectivement. Des valeurs numériques sont indiquées dans chaque case du tableau, et l'organe expert choisit la valeur numérique correspondant aux têtes de ligne et de colonne qu'il détermine comme les plus appropriées à la relation particulière appliquée au groupe considéré. Chaque case du tableau a une valeur numérique qui peut être de préférence modulée par l'organe expert entre les valeurs des cases voisines. Les valeurs des cases sont de préférence des valeurs d'une échelle numérique bornée ; lorsque les données obtenues de l'organe expert proviennent d'une personne physique, l'échelle numérique a de préférence une étendue qui peut être divisée par trois, car une personne affecte intuitivement le tiers inférieur aux "mauvais", le tiers médian aux "normaux" et le tiers supérieur aux "bons".

Le nombre de relations étudiées dépend évidemment de la complexité du comportement concerné, et de la finesse voulue pour l'évaluation. Ainsi, il est souhaitable que le nombre de relations soit au moins égal à 3 ; on a constaté, dans une application à un système dans lequel 46 groupes d'activités étaient définis, qu'un nombre de relations égal à 8 permettait une appréciation précise de comportements globaux complexes.

Lorsqu'un organe expert a ainsi donné une valeur pour chacune des relations pour chacun des groupes, il exécute une étape de pondération, c'est-à-dire de détermination d'un poids pour chaque relation ou groupe de relations. Ces poids représentent l'évaluation par l'organe expert de l'importance de la relation particulière par rapport aux autres.

Cette opération de pondération est primordiale. En effet, il est certain que les relations n'ont pas toutes la même importance. D'autre part, il est important, pour l'évaluation globale, que chaque organe expert indique les relations les plus essentielles ou les moins importantes. Cette étape est de préférence exécutée par l'organe expert juste après son évaluation des relations.

Le procédé, après ces étapes exécutées par les organes experts, comporte une étape de calcul de résultats bruts. On peut traiter les résultats de chaque organe expert, ou regrouper les résultats de tous les organes experts pour obtenir des résultats globaux.

Les résultats globaux sont des résultats bruts, et la pondération peut être utilisée essentiellement de deux manières différentes. Selon une première technique, la pondération d'un organe expert est appliquée à ses propres évaluations, et, selon une seconde technique, la moyenne des pondérations des organes experts est déterminée et utilisée pour la pondération des résultats de chaque organe expert.

Bien entendu, tous ces calculs peuvent être réalisés avec application des méthodes classiques de correction bien connues pour les études statistiques. Par exemple, il est en général souhaitable d'utiliser un traitement des anomalies. Ces anomalies sont des valeurs qui diffèrent beaucoup de la valeur moyenne des évaluations. On connaît de nombreuses méthodes permettant ce traitement, allant de la simple suppression des valeurs anormales au remplacement de celles-ci par des moyennes ou des moyennes elles-mêmes pondérées. Ces traitements statistiques peuvent être réalisés au niveau d'un organe expert ou au niveau de la collection d'organes experts. Par exemple, un organe expert peut être considéré comme "anormal" lorsqu'il donne des résultats presque tous très différents de ceux des autres organes experts. Il peut alors être souhaitable, après analyse, de ne pas tenir compte des évaluations de cet organe expert. On peut aussi traiter uniquement les anomalies qui ne représentent en général qu'une petite fraction du total des évaluations. En général, le nombre d'anomalies est inférieur à 5 % du total des évaluations.

On obtient alors des résultats bruts qui peuvent être présentés de diverses manières. La présentation la plus simple est une représentation sur un graphique ayant par exemple comme coordonnées d'une part des valeurs obtenues et d'autre part les groupes définis.

Bien qu'on ait décrit un procédé dans lequel l'évaluation par les organes experts s'applique à des relations entre une variable d'intensité et une variable d'extensité, c'est-à-dire à deux dimensions, l'étape d'évaluation peut comprendre en outre l'évaluation de relations entre trois variables, c'est-à-dire à trois dimensions. De même, l'étape d'évaluation peut comprendre en outre l'évaluation de simples grandeurs qui peuvent être directement quantifiées, par exemple le poids d'une entité active.

Grâce à la présentation des résultats sous une forme numérique simple, le procédé de modélisation selon l'invention a l'avantage important de représenter des comportements globaux comprenant des activités très complexes et diverses sous une forme très synthétique et quantifiée. Par exemple, dans le cas évoqué d'un essaim d'abeilles, le résultat numérique obtenu est véritablement représentatif de la vie même de l'essaim.

Le procédé de l'invention permet la construction de moyens électroniques, incluant de préférence un réseau de neurones, pour la modélisation de comportements globaux comprenant des activités complexes, diverses et complémentaires. Les modèles obtenus peuvent être appliqués à touts sortes de domaines, leur exploitation dans chaque domaine n'entrant pas dans le cadre de l'invention.

## Revendications

1. Procédé de construction de moyens électroniques pour la modélisation de comportements globaux comprenant des activités complexes, diverses et complémentaires, par des grandeurs pouvant être représentées par des variables d'intensité et des variables d'extensité, le procédé comprenant, dans une première étape, la détermination des variables qui doivent être utilisées dans des modèles des activités par détermination de descripteurs représentatifs chacun de valeurs d'une variable, dans une seconde étape, la sélection des variables à incorporer à au moins un modèle optimal des activités par évaluation des résultats de plusieurs modèles, et, dans une troisième étape, la construction de moyens électroniques correspondant au modèle optimal obtenu, **caractérisé en ce que**
la première étape comprend une étape de définition de groupes d'activités choisies parmi les activités complexes, diverses et complémentaires des comportements globaux, chaque groupe formant un ensemble cohérent d'activités, l'ensemble des groupes formant une collection de groupes telle que les activités de tous les groupes forment une proportion significative des activités complexes, diverses et complémentaires des comportements globaux,
la seconde étape comprend
l'exécution, par chaque organe expert d'une collection d'organes experts, d'opérations qui comprennent une évaluation, pour chaque groupe d'activités, de plusieurs relations entre une variable d'intensité et une variable d'extensité représentatives des grandeurs, l'évaluation ayant un résultat sous forme d'une valeur choisie sur une échelle numérique bornée, et
la pondération des relations par détermination d'un poids à affecter aux relations, puis,
pour l'ensemble des organes experts, une étape de calcul de résultats bruts et de résultats pondérés par utilisation des poids affectés aux relations par les organes experts, et de présentation des résultats.

2. Procédé selon la revendication 1, **caractérisé en ce qu'**il comprend, avant son exécution, la construction et le test d'un ensemble formant un dispositif d'observation et d'évaluation, mettant en oeuvre la complémentarité des logiques classificatoire, de rangement et numérique, et rapprochant de façon objective les variables d'intensité et d'extensité, pour la définition de leurs relations.

3. Procédé selon l'une des revendications 1 et 2, **caractérisé en ce que** l'étape de définition de groupes d'activités comprend la formation, pour chaque groupe, d'une liste d'activités.

4. Procédé selon l'une quelconque des revendications 1 à 3, **caractérisé en ce que** la pondération des relations par détermination d'un poids à affecter aux relations est choisie parmi la pondération séparée de chacune des relations, et la pondération par groupes de plusieurs relations apparentées.

5. Procédé selon l'une quelconque des revendications 1 à 4, **caractérisé en ce que** l'étape de calcul comprend, pour chaque organe expert, un calcul de résultats bruts à partir des valeurs déterminées par l'organe expert, et un calcul de résultats pondérés par utilisation des poids affectés par l'organe expert.

6. Procédé selon l'une quelconque des revendications 1 à 4, **caractérisé en ce que** l'étape de calcul comprend, pour chaque organe expert, un calcul de résultats bruts à partir des valeurs déterminées par l'organe expert, et un calcul de résultats pondérés par utilisation des poids déterminés par l'ensemble des organes experts.

7. Procédé selon l'une quelconque des revendications précédentes, **caractérisé en ce qu'**il comprend aussi le traitement des anomalies présentées par les résultats d'un organe expert au moins.

8. Procédé selon la revendication 7, **caractérisé en ce que** le traitement des anomalies présentées par les résultats d'un organe expert au moins, pour une relation au moins, est choisi parmi la suppression d'une valeur présentant le plus de différence avec les résultats moyens, et le remplacement d'une valeur présentant le plus de différence par une valeur correspondant aux résultats moyens.

9. Procédé selon l'une quelconque des revendications précédentes, **caractérisé en ce qu'**une variable d'intensité au moins est choisie dans le groupe comprenant un niveau de complexité d'une activité, un niveau d'élaboration d'un contrôle d'activité, une intensité de perturbation d'une activité, un degré de qualité d'une activité, et un niveau de spécialisation.

10. Procédé selon l'une quelconque des revendications précédentes, **caractérisé en ce qu'**une variable d'extensité au moins est choisie dans le groupe comprenant un nombre d'unités exécutant un groupe d'activités, une durée d'une activité, une durée d'une série d'activités, un délai avant l'obtention d'un résultat, une étendue d'un milieu dans lequel s'effectue une activité, et une durée de spécialisation.
